# EUROPEAN PATENT SPECIFICATION

(11) **EP 4 156 335 B1**
(45) Date of publication and mention of the grant of the patent: **06.05.2026**
(21) Application number: 21900107.0
(22) Date of filing: 03.12.2021
(51) Int. Cl.: H01M 4/02, H01M 10/0525, H01M 4/38

(54) **PRE-LITHIATED SILICON NEGATIVE ELECTRODE MATERIAL, SILICON NEGATIVE ELECTRODE PLATE, METHOD FOR PREPARING SAME, AND LITHIUM-ION BATTERY**
VORLITHIIERTES SILIZIUM-NEGATIVELEKTRODENMATERIAL, SILIZIUM-NEGATIVELEKTRODENPLATTE UND HERSTELLUNGSVERFAHREN DAFÜR SOWIE LITHIUMBATTERIE
MATÉRIAU D'ÉLECTRODE NÉGATIVE EN SILICIUM PRÉ-LITHIÉ, FEUILLE D'ÉLECTRODE NÉGATIVE EN SILICIUM ET PROCÉDÉ DE PRÉPARATION ASSOCIÉ, ET BATTERIE AU LITHIUM

(30) Priority: 03.12.2020 CN 202011394818
(43) Date of publication of application: 29.03.2023
(73) Proprietor: Zhuhai CosMX Battery Co., Ltd., Zhuhai, Guangdong 519180 (CN)
(72) Inventor: GUO, Panlong, Zhuhai, Guangdong 519180 (CN); LI, Suli, Zhuhai, Guangdong 519180 (CN); CHEN, Weiping, Zhuhai, Guangdong 519180 (CN); CHU, Lin, Zhuhai, Guangdong 519180 (CN)
(74) Representative: Murgitroyd & Company
(86) International application number: PCT/CN2021/135457
(87) International publication number: WO 2022/117083

(56) References cited:
- CN-A- 105 449 218
- CN-A- 111 864 181
- CN-A- 112 510 186
- US-A1- 2017 294 648
- US-B2- 10 818 919
- LIU JIACHENG, PICKETT PHILLIP D., PARK BUMJUN, UPADHYAY SUNIL P., ORSKI SARA V., SCHAEFER JENNIFER L.: "Non-solvating, side-chain polymer electrolytes as lithium single-ion conductors: synthesis and ion transport characterization", POLYMER CHEMISTRY, vol. 11, no. 2, 2 January 2020 (2020-01-02), pages 461 - 471, XP055936125, ISSN: 1759-9954, DOI: 10.1039/C9PY01035A
- RACHID MEZIANE; JEAN-PIERRE BONNET; MATTHIEU COURTY; KARIM DJELLAB; MICHEL ARMAND;: "Single-ion polymer electrolytes based on a delocalized polyanion for lithium batteries", ELECTROCHIMICA ACTA, vol. 57, 17 March 2011 (2011-03-17), AMSTERDAM, NL , pages 14 - 19, XP028124235, ISSN: 0013-4686, DOI: 10.1016/j.electacta.2011.03.074

## Description

### TECHNICAL FIELD

The present disclosure belongs to the field of lithium-ion batteries, and specifically, relates to a pre-lithiated silicon negative electrode material, a silicon negative electrode plate, a method for preparing the same, and a lithium-ion battery.

### BACKGROUND

Lithium-ion batteries have developed rapidly due to their advantages such as high energy densities, long cycle life, and environmental friendliness, and are widely applied to electronic products and electric vehicles. Negative electrode materials of a lithium-ion battery mainly include materials such as alloys, carbon-based materials, Li4Ti5O12, and transition metal compounds, of which a carbon-based graphite negative electrode material is most commonly used. However, this material has a relatively low specific capacity (372 mAh/g) and a relatively large irreversible capacity loss. Consequently, it is difficult for lithium-ion batteries to meet requirements for usage performance, and it is difficult to make breakthroughs in development. Silicon has a relatively high specific capacity (4200 mAh/g) and is rich in resources. Silicon is expected to replace graphite as one of the most promising negative electrode materials for batteries (refer to the literature of Nanoscale, 2016, 8(1): 74-103), and has become a current research hotspot. However, silicon has a relatively large volume expansion (300%) and huge capacity fading during delithiation/intercalation, which directly leads to instability of a solid electrolyte interphase film (SEI film). A stable SEI film is a key factor in prolonging a battery cycle life. In addition, formation and destruction of the SEI film during charging/discharging of a lithium-ion battery continuously consume lithium ions, resulting in low initial Coulombic efficiency and short cycle life of the lithium-ion battery (refer to the literature of Journal of the American Chemical Society, 2016, 138(25):7918-7931). US 2017/294648 A1 teaches the anode of a lithium secondary battery, wherein the anode active material particles comprise at least one of Si, Ge, Sn and A1 and a coating which is at least partly polymeric.

In view of the foregoing problems, the most effective method at present is: using a pre-lithiation technology to add a small amount of a lithium source before a formal charge/discharge cycle of an electrode to balance lithium excessively consumed in a reaction, and compensate for cathode lithium consumed during side reaction and SEI film formation processes, so as to increase initial Coulombic efficiency, prolong the battery cycle life, alleviate volume expansion to a specific extent, and improve comprehensive performance, such as stability, of the lithium-ion battery (refer to the literature of Advanced Energy Materials, 2017, 7(17):1602607). At present, most commonly used pre-lithiation methods include pre-lithiation with lithium powder or a metal lithium strip, electrochemical pre-lithiation, mechanical pre-lithiation, and the like. However, these methods commonly have disadvantages such as poor safety and complex operations. Therefore, research and development of a novel, efficient, and safe pre-lithiated material and method to improve performance, such as circularity and stability, of a lithium-ion battery are a still important issue faced by persons skilled in the art.

### SUMMARY

In view of the foregoing technical problems existing in conventional technologies, the present disclosure provides a pre-lithiated silicon negative electrode material, and the material is used as an active material of a silicon negative electrode, which can achieve efficient and safe pre-lithiation of the silicon negative electrode, to improve cycle performance of the silicon negative electrode and increase initial charge/discharge efficiency of a battery, and meanwhile, to improve comprehensive performance, such as circularity and stability, of a lithium-ion battery.

The present disclosure further provides a silicon negative electrode plate, which is formed by using the foregoing pre-lithiated silicon negative electrode material, to form a stable film on a surface of the negative electrode, and reduce excessively fast thickening of an SEI film caused by a side reaction of the silicon negative electrode plate during a cycle process, and meanwhile, to alleviate volume expansion of a silicon negative electrode. This helps to form a stable solid electrolyte interphase and prolong cycle life of a battery.

The present disclosure further provides a method for preparing the foregoing pre-lithiated silicon negative electrode material and silicon negative electrode plate, so that the foregoing pre-lithiated silicon negative electrode material and silicon negative electrode plate can be prepared. The method is simple, safe, and efficient.

The present disclosure further provides a lithium-ion battery, which has qualities such as high initial Coulombic efficiency and battery capacity retention.

According to one aspect of the present disclosure, a pre-lithiated silicon negative electrode material is provided, including a silicon negative electrode material and a lithium-containing polymer compounded with the silicon negative electrode material. The lithium-containing polymer includes a polymer shown in the following formula 1: 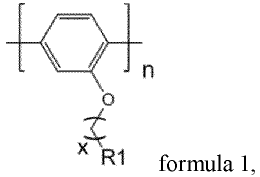 where x ranges from 1 to 12, and R1 is: 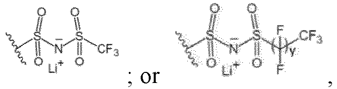 where y ranges from 1 to 4; or

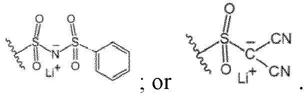

In the structural formula of R1 above, a position of a wavy line (on the left side) is a connected polymer.

The pre-lithiated silicon negative electrode material provided in the present disclosure uses a lithium-containing polymer material to achieve efficient and safe pre-lithiation of a silicon negative electrode, improve initial charge/discharge efficiency of the silicon negative electrode, and improve cycle performance of the silicon negative electrode. The polymer material is coated on a surface of the silicon negative electrode. During a charge/discharge process, lithium ions in the polymer participate in formation of an SEI film, which reduces consumption of lithium salts in a system and improves initial charge/discharge efficiency. In addition, the polymer may play a role in protecting an interface of the silicon negative electrode, reducing thickening of the silicon negative electrode due to a side reaction, and improving capacity retention during a cycle process.

According to research of the present disclosure, n in the compound of Formula 1 generally ranges from 20 to 10000, which better helps to improve initial charge/discharge efficiency of the silicon negative electrode. A reason may be that this helps the lithium-containing polymer be coated on the surface of the silicon negative electrode material to form a stable protective film.

According to further research of the present disclosure, content of the lithium-containing polymer in the pre-lithiated silicon negative electrode material may be 0.1 wt% to 20 wt%.

In a specific implementation process of the present disclosure, the pre-lithiated silicon negative electrode material may be prepared according to a preparation process including the following steps: placing the silicon negative electrode material in a solution containing a lithium-containing polymer, and then removing a solvent to obtain the pre-lithiated silicon negative electrode material.

During specific implementation, the solvent may be removed by using a decompression rotary evaporation method to obtain the pre-lithiated silicon negative electrode material. By using this method, the lithium-containing polymer may generally be coated on the surface of the silicon negative electrode material.

In a specific implementation process of the present disclosure, the foregoing silicon negative electrode material may be a silicon negative electrode material commonly used in the art, for example, may include silicon monoxide or pure silicon.

According to another aspect of the present disclosure, a method for preparing the foregoing pre-lithiated silicon negative electrode material includes: placing the silicon negative electrode material in a solution containing a lithium-containing polymer, and then removing a solvent to obtain the pre-lithiated silicon negative electrode material.

In a specific implementation of the present disclosure, the solvent may be removed by using a decompression rotary evaporation method to obtain the pre-lithiated silicon negative electrode material.

According to research of the present disclosure, in the solution containing the lithium-containing polymer, a mass concentration of the lithium-containing polymer may range from 0.1 wt% to 50 wt%.

According to still another aspect of the present disclosure, a pre-lithiated silicon negative electrode plate is provided, including a negative electrode current collector and a functional layer coated on the negative electrode current collector. A raw material of the functional layer may include the foregoing pre-lithiated silicon negative electrode material, a conductive agent, and a binder.

In an implementation of the present disclosure, content of the pre-lithiated silicon negative electrode material in the raw material of the functional layer may range from 60 wt% to 90 wt%, and/or content of the conductive agent may range from 5 wt% to 30 wt%, and/or content of the binder may range from 5 wt% to 30 wt%.

In another implementation of the present disclosure, the raw material of the functional layer may further include at least one of other negative electrode materials commonly used in the art, and may generally include a carbon negative electrode material commonly used in the art, for example, may include at least one of natural graphite, artificial graphite, mesophase carbon fiber, mesophase carbon microspheres, and soft carbon. Content of a silicon negative electrode active material including the pre-lithiated silicon negative electrode material and another negative electrode material may range from 60 wt% to 90 wt%, and/or content of the conductive agent may range from 5 wt% to 30 wt%, and/or content of the binder may range from 5 wt% to 30 wt%. In a specific implementation process of the present disclosure, in the silicon negative electrode active material including the pre-lithiated silicon negative electrode material and the another negative electrode material, content of the pre-lithiated silicon negative electrode material may range from 3 wt% to 100 wt%.

In a specific implementation process of the present disclosure, the current collector may be a current collector commonly used in the art, such as copper foil, and the conductive agent may be a conductive agent commonly used in the art, such as conductive carbon black. In an implementation of the present disclosure, the binder may be a binder commonly used in the art, and generally, may be a polyacrylic acid binder, such as a polyacrylic acid having a weight average molecular weight of 450,000 Da.

According to yet another aspect of the present disclosure, a method for preparing the pre-lithiated silicon negative electrode plate is provided, including: coating the negative electrode current collector with slurry containing the raw material of the functional layer to form the functional layer, so as to obtain the pre-lithiated silicon negative electrode plate. In a specific implementation process of the present disclosure, a method for the coating above may be a coating method commonly used in the art.

In still yet another aspect of the present disclosure, a lithium-ion battery formed by using the foregoing pre-lithiated silicon negative electrode plate is further provided, and generally, may include a positive electrode plate, a negative electrode plate, and an electrolyte. The positive electrode plate may be selected from at least one of lithium iron phosphate, lithium vanadium phosphate, lithium cobaltate, or lithium manganate, and for example, may be a mixture of lithium iron phosphate, lithium vanadium phosphate, and lithium cobaltate. The negative electrode plate may be the foregoing silicon negative electrode plate made of the pre-lithiated negative electrode material coated with a lithium-containing polymer, or a mixed silicon negative electrode plate made of the pre-lithiated negative electrode material coated with a lithium-containing polymer and another negative electrode material commonly used in the art, which may be, for example, a silicon negative electrode plate mixed with at least one of natural graphite, artificial graphite, mesophase carbon fiber, mesophase carbon microspheres, or soft carbon. The electrolyte may be an electrolyte commonly used for a lithium-ion battery in the art, such as LiPF₆.

Implementation of the present disclosure at least has the following beneficial effects.

When the pre-lithiated silicon negative electrode material provided in the present disclosure is used as an active material of a silicon negative electrode for application, efficient and safe pre-lithiation of the silicon negative electrode can be achieved, to improve cycle performance of the silicon negative electrode and increase initial charge/discharge efficiency of a battery, which may reach 79.8% or higher, and meanwhile, to improve comprehensive performance, such as circularity and stability, of a lithium-ion battery.

The silicon negative electrode plate provided in the present disclosure is formed by using the foregoing pre-lithiated silicon negative electrode material, to form a stable film on a surface of a negative electrode, and reduce excessively fast thickening of an SEI film caused by a side reaction of a silicon negative electrode plate during a cycle process, and meanwhile, to alleviate volume expansion of a silicon negative electrode. This helps to form a stable solid electrolyte interphase and prolong cycle life of a battery.

According to the methods for preparing a pre-lithiated silicon negative electrode material and a silicon negative electrode plate provided in the present disclosure, the foregoing pre-lithiated silicon negative electrode material and silicon negative electrode plate can be prepared. The method is simple, safe, and efficient.

The lithium-ion battery provided in the present disclosure has qualities such as high initial Coulombic efficiency and battery capacity retention.

### BRIEF DESCRIPTION OF THE DRAWINGS

FIG. 1 is a 1H nuclear magnetic resonance spectrogram of a polymer 1, a polymer 2, and a polymer 3 in Preparation Example 2.
FIG. 2 is a cycle-capacity data diagram of batteries described in Example 1 to Example 3 and Comparative Example 1.
FIG. 3 is a SEM diagram of a cross section of a negative electrode obtained after batteries described in Example 1 to Example 3 and Comparative Example 1 are cycled for 200 cycles, where a width of a white scale is a thickness of an SEI film formed on a surface of a silicon negative electrode.

### DETAILED DESCRIPTIONS OF THE EMBODIMENTS

In an embodiment of the present disclosure, a used process of preparing a lithium-containing polymer is as follows.

Experimental methods used in the following preparation examples are all conventional methods unless otherwise specified, and reagents, materials, and the like that are used may be all obtained from commercial sources unless otherwise specified.

Synthesis paths of precursors and polymers in the following preparation examples are as follows.

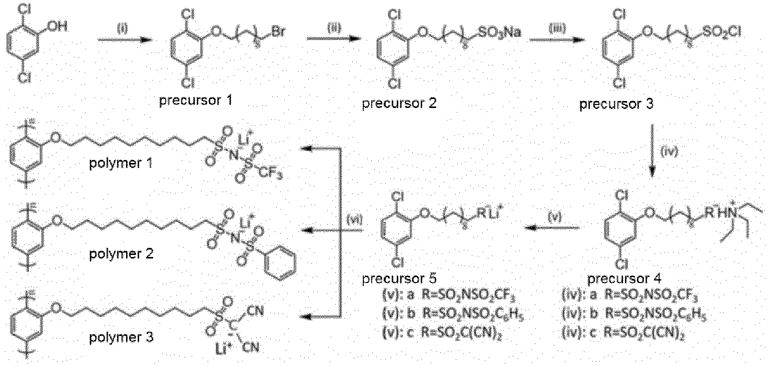

### Preparation Example 1:

### Precursor 1: Preparation of 2-((10-Bromodecane)oxy)-1,4-dichlorobenzene

2,5-Dichlorophenol (10 g, 61.3 mmol), 1,10-dibromodecane (55 g, 183.3 mmol), potassium carbonate (21 g, 152.2 mmol), potassium iodide (1.25 g, 7.7 mmol), and acetone (320 mL) were added into a round-bottom flask containing magnetons and mixed, and the mixture was stirred for reflux for 12 hours. After a reflux reaction was completed, an inorganic precipitate was filtered out, and then the solvent was evaporated under reduced pressure to obtain an organic oily mixture. The organic oily mixture was slowly added to cold methanol, and a precipitate was collected. The precipitate was separated through column chromatography and dried to obtain a white powdery product, namely, a precursor 1, whose structural formula is shown in the foregoing synthesis paths.

### Precursor 2: Preparation of 10-(2,5-dichlorophenoxy)decane-1-sulfonate sodium

2-((10-Bromodecane)oxy)-1,4-dichlorobenzene (12 g, 31.4 mmol), sodium sulfite (9.9 g, 78.5 mmol), benzyltriethylammonium bromide (0.43 g, 1.58 mmol), and an ethanol/water mixture (88 mL, 1:1) were added into a round-bottom flask containing magnetons and mixed. The mixture was stirred for reflux at 95°C for 24 hours to obtain a precipitated solid product, and hot filtration was performed. A filtrate was cooled at room temperature for 12 hours, and filtering was performed again to obtain a mixture. A refiltered solid was vigorously stirred in dichloromethane (100 mL) and filtered to remove an unreacted organic precursor. A brownish white product was obtained through recrystallization from water, and then dried in a vacuum oven at 80°C for 12 hours to obtain a final product precursor 2, whose structural formula is shown in the foregoing synthesis paths.

### Precursor 3: Preparation of 10-(2,5-dichlorophenoxy)decane-1-sulfonyl chloride

The precursor 2 (7 g, 17.3 mmol), anhydrous tetrahydrofuran (THF) THF (55 mL), and a catalytic amount of DMF were added into a dry round-bottom flask in a glove box. The flask was sealed and transferred to a Schlenk line under nitrogen protection. The mixture was cooled to 4°C by using an ice/water bath, then added with thionyl chloride (10.3 g, 86.3 mmol) slowly by using a syringe, and was stirred at 4°C for 1 hour for reaction and left overnight at room temperature. The reaction mixture was then poured into an ice/water (400 mL) mixture to quench excess thionyl chloride. A product was extracted from the aqueous mixture with dichloromethane (3 x 50 mL), and then combined organic phases were washed with water (3 x 20 mL) and dried with anhydrous magnesium sulfate. After the solvent was evaporated under reduced pressure, a product was recrystallized from hexane to obtain a colorless crystalline product, namely, a precursor 3, whose structural formula is shown in the foregoing synthesis paths.

### Precursors 4a-4c: Preparation of (10-(2,5-dichlorophenoxy) decane sulfonyl) trifluoromethyl sulfonyl imide triethylamine

Trifluoromethanesulfonamide (2.27 g, 15.2 mmol), triethylamine (4.61 g, 45.6 mmol), and anhydrous THF (11 mL) were added into a round-bottom flask containing magnetons in a glove box and mixed, and then the flask was sealed. The mixture was transferred to a Schlenk line under nitrogen protection and cooled to 4°C. The precursor 3 (6.1 g, 15.2 mmol) was dissolved in anhydrous THF (20 mL) and added dropwise to the cooled mixture. Reaction was carried out at 4°C for 1 hour, and then the reaction was left overnight at room temperature. After the reaction, an inorganic precipitate was filtered out, and a solvent in the filtrate was evaporated to obtain a product. The obtained product was redissolved in DCM (100 mL), washed with water (3 x 30 mL), dried with anhydrous magnesium sulfate, and concentrated under reduced pressure. The product was further dried in a vacuum oven at 60°C for 12 hours to obtain a light yellow oily product, namely, a precursor 4a.

A preparation method the same as that for the precursor 4a was employed by using benzenesulfonamide instead of trifluoromethanesulfonamide to obtain a precursor 4b, and by using malononitrile instead of trifluoromethanesulfonamide to obtain a precursor 4c, and other steps were the same. Structural formulas of the precursors 4a, 4b, and 4c are shown in the foregoing synthesis paths, and R substituents thereof are shown by (iv) a, (iv) b, and (iv) c, respectively.

### Precursors 5a-5c: Preparation of lithium(10-(2,5-dichlorophenoxy)decanesulfonyl)trifluoromethylsulfonyl imide

Under nitrogen protection, lithium hydride (0.23 g, 28.9 mmol) in anhydrous THF (20 mL) suspension liquid was cooled to 4°C by using an ice/water bath. A solution of the precursor 4a (8.8 g, 14.3 mmol) in anhydrous THF (15 mL) was added dropwise to the suspension liquid for reaction at room temperature for 2 hours. After the reaction ends, the mixture was filtered to remove excess lithium hydride, and distilled under reduced pressure to remove a solvent. An obtained light yellow oil was stirred in chloroform (30 mL) to remove unreacted precursor, and then chloroform was decanted. Vacuum drying was performed at 80°C for 24 hours, to obtain a white powdery product, namely, a precursor 5a, whose structural formula is shown in the foregoing synthesis paths.

A preparation method the same as that for the precursor 5a was employed by using the precursor 4b instead of the precursor 4a to obtain a precursor 5b, and by using the precursor 4c instead of the precursor 4a to obtain a precursor 5c, and other steps were the same. Structural formulas of the precursors 5a, 5b, and 5c are shown in the foregoing synthesis paths, and R substituents thereof are shown by (v) a, (v) b, and (v) c, respectively.

### Preparation Example 2:

### Preparation of polymers 1 to 3:

Anhydrous dimethylacetamide (DMAc) was frozen-thawed three times to remove oxygen. Then the precursor 5a (10 mmol), nickel chloride (0.1 equiv), triphenylphosphine (0.4 equiv), bipyridine (0.1 equiv), zinc (3 equiv), and the DMAc (20 mL) were placed in a round-bottom flask under argon atmosphere. The mixture was heated to 50°C and stirred for 1 hour, then reacted at 90°C for 7 days, and added with a methanol solution containing 5 wt% HCl to quench zinc metal. The obtained mixture was concentrated to be precipitated in liquid. The precipitate was redissolved and dialyzed for lithium-ion exchange. Drying was performed in a vacuum oven at 180°C for 24 hours, to completely remove the solvent, so as to obtain a polymer 1.

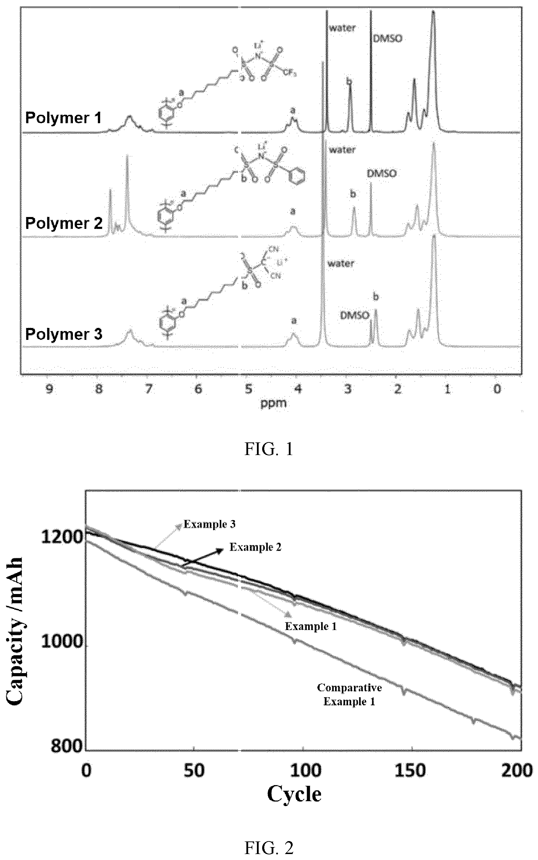

A preparation method the same as that for the polymer 1 was employed by using the precursor 5b instead of the precursor 5a to obtain a polymer 2, and by using the precursor 5c instead of the precursor 5a to obtain a polymer 3. A 1H nuclear magnetic resonance spectrogram of the polymers 1 to 3 are shown in FIG. 1.

To make objectives, technical solutions, and advantages of the present disclosure clearer, the following clearly describes the technical solutions in the embodiments of the present disclosure with reference to the embodiments of the present disclosure. Apparently, the described embodiments are some but not all of the embodiments of the present disclosure. All other embodiments obtained by a person of ordinary skill in the art based on the embodiments of the present disclosure without creative efforts shall fall within the protection scope of the present disclosure.

### Example 1

The polymer 1 was dissolved in a solvent DMAc to prepare a polymer solution, where a concentration of the polymer 1 in the solution was 2 wt%. The polymer solution was added with a silicon monoxide material, and was fully stirred so that the polymer solution and a silicon negative electrode were fully mixed. A solvent was removed through decompression rotary evaporation, to obtain a pre-lithiated silicon negative electrode material, where content of a lithium-containing polymer in the pre-lithiated silicon negative electrode material was 4 wt%.

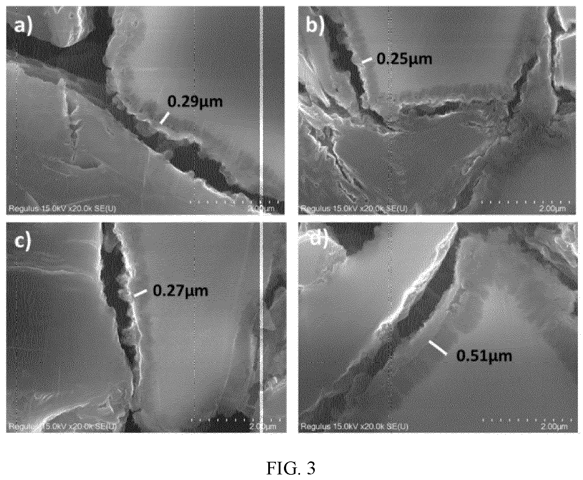

The pre-lithiated silicon negative electrode material, a binder PAA (molecular weight Mw: 45w), and a conductive agent SP were dispersed in water at a mass ratio of 9:1:1, and uniform slurry was formed by grinding and stirring, and coated on copper foil to form a functional layer. A pre-lithiated silicon negative electrode plate was obtained through preparation. Then the pre-lithiated silicon negative electrode plate was placed in a drying box and dried at 80°C for 36 hours, and then was cut into a circular electrode plate with a diameter of 1 cm and stored in a glove box (with an area density of 2 mg/cm2). A 2032 coin battery was assembled by using a lithium plate as a counter electrode. An electrolyte adopted an EC/DMC/DEC solution at a volume ratio of 1:1:1 with 1 mol/L LiPF₆ as a lithium salt, where the electrolyte contained an FEC additive (10%, vol%). An assembled battery was left still for 12 hours, and the battery left still was charged and discharged at 25°C with a constant current on a LAND test system. Small current charging/discharging was adopted in the first cycle of charging/discharging, where a current was 35.0 mA/g (about 0.025 C), and a voltage ranged from 0.01 V to 1.2 V, a charge capacity was 1609 mAh/g, a discharge capacity was 1290 mAh/g, and initial charge/discharge efficiency was 80.2%. At the beginning of the second cycle, a charge/discharge current was 280 mA/g (about 0.2C), a voltage ranged from 0.01 V to 1.5 V, a discharge capacity of the battery was 1236 mAh/g. After 200 cycles, the capacity was 978 mAh/g, and capacity retention was 79.1% (as shown in FIG. 2). After 200 cycles, it may be seen from a SEM diagram of a cross section of the negative electrode that an SEI film formed on a silicon surface is about 0.29 µm (as shown in FIG. 3).

### Example 2

The polymer 2 was dissolved in a solvent DMAc to prepare a polymer solution, where a concentration of the polymer 1 in the solution was 2 wt%. The polymer solution was added with a silicon monoxide material, and was fully stirred so that the polymer solution and a silicon negative electrode were fully mixed. A solvent was removed through decompression rotary evaporation, to obtain a pre-lithiated silicon negative electrode material, where content of a lithium-containing polymer in the pre-lithiated silicon negative electrode material was 4 wt%.

The pre-lithiated silicon negative electrode material, a binder PAA (molecular weight Mw: 45w), and a conductive agent SP were dispersed in water at a mass ratio of 9:1:1, and uniform slurry was formed by grinding and stirring, and coated on copper foil to form a functional layer. A pre-lithiated silicon negative electrode plate was obtained through preparation. Then the pre-lithiated silicon negative electrode plate was placed in a drying box and dried at 80°C for 36 hours, and then was cut into a circular electrode plate with a diameter of 1 cm and stored in a glove box (with an area density of 2 mg/cm2). A 2032 coin battery was assembled by using a lithium plate as a counter electrode. An electrolyte adopted an EC/DMC/DEC solution at a volume ratio of 1:1:1 with 1 mol/L LiPF₆ as a lithium salt, where the electrolyte contained an FEC additive (10%, vol%). An assembled battery was left still for 12 hours, and the battery left still was charged and discharged at 25°C with a constant current on a LAND test system. Small current charging/discharging was adopted in the first cycle of charging/discharging, where a current was 35.0 mA/g (about 0.025 C), a voltage ranged from 0.01 V to 1.2 V, a charge capacity was 1629 mAh/g, a discharge capacity was 1310 mAh/g, and initial charge/discharge efficiency was 80.4%. At the beginning of the second cycle, a charge/discharge current was 280 mA/g (about 0.2C), a voltage ranged from 0.01 V to 1.5 V, and a discharge capacity of the battery was 1249 mAh/g. After 200 cycles, the capacity was 975 mAh/g, and capacity retention was 78.1% (as shown in FIG. 2). After 200 cycles, it may be seen from a SEM diagram of a cross section of the negative electrode that an SEI film formed on a silicon surface is about 0.25 µm (as shown in FIG. 3).

### Example 3

The polymer 3 was dissolved in a solvent DMAc to prepare a polymer solution, where a concentration of the polymer 1 in the solution was 2 wt%. The polymer solution was added with a silicon monoxide material, and was fully stirred so that the polymer solution and a silicon negative electrode were fully mixed. A solvent was removed through decompression rotary evaporation, to obtain a pre-lithiated silicon negative electrode material, where content of a lithium-containing polymer in the pre-lithiated silicon negative electrode material was 4 wt%.

The pre-lithiated silicon negative electrode material, a binder PAA (molecular weight Mw: 45w), and a conductive agent SP were dispersed in water at a mass ratio of 9:1:1, and uniform slurry was formed by grinding and stirring, and coated on copper foil to form a functional layer. A pre-lithiated silicon negative electrode plate was obtained through preparation. Then the pre-lithiated silicon negative electrode plate was placed in a drying box and dried at 80°C for 36 hours, and then was cut into a circular electrode plate with a diameter of 1 cm and stored in a glove box (with an area density of 2 mg/cm2). A 2032 coin battery was assembled by using a lithium plate as a counter electrode. An electrolyte adopted an EC/DMC/DEC solution at a volume ratio of 1:1:1 with 1 mol/L LiPF₆ as a lithium salt, where the electrolyte contained an FEC additive (10%, vol%). An assembled battery was left still for 12 hours, and the battery left still was charged and discharged at 25°C with a constant current on a LAND test system. Small current charging/discharging was adopted in the first cycle of charging/discharging, where a current was 35.0 mA/g (about 0.025 C), a voltage ranged from 0.01 V to 1.2 V, a charge capacity was 1601 mAh/g, a discharge capacity was 1278 mAh/g, and initial charge/discharge efficiency was 79.8%. At the beginning of the second cycle, a charge/discharge current was 280 mA/g (about 0.2C), a voltage ranged from 0.01 V to 1.5 V, and a discharge capacity of the battery was 1231 mAh/g. After 200 cycles, the capacity was 980 mAh/g, and capacity retention was 79.6% (as shown in FIG. 2). After 200 cycles, it may be seen from a SEM diagram of a cross section of the negative electrode that an SEI film formed on a silicon surface is about 0.27 µm (as shown in FIG. 3).

### Comparative Example 1

A silicon monoxide, a binder PAA (molecular weight Mw: 45w), and a conductive agent SP were dispersed in water at a mass ratio of 9:1:1, and uniform slurry was formed by grinding and stirring, and coated on copper foil to form a functional layer. A silicon negative electrode plate was obtained through preparation. Then the silicon negative electrode plate was placed in a drying box and dried at 80°C for 36 hours, and then was cut into a circular electrode plate with a diameter of 1 cm and stored in a glove box (with an area density of 2 mg/cm2). A 2032 coin battery was assembled by using a lithium plate as a counter electrode. An electrolyte adopted an EC/DMC/DEC solution at a volume ratio of 1:1:1 with 1 mol/L LiPF₆ as a lithium salt, where the electrolyte contained an FEC additive (10%, vol%). An assembled battery was left still for 12 hours, and the battery left still was charged and discharged at 25°C with a constant current on a LAND test system. Small current charging/discharging was adopted in the first cycle of charging/discharging, where a current was 35.0 mA/g (about 0.025 C), a voltage ranged from 0.01 V to 1.2 V, a charge capacity was 1648 mAh/g, a discharge capacity was 1224 mAh/g, and initial charge/discharge efficiency was 74.3%. At the beginning of the second cycle, a charge/discharge current was 280 mA/g (about 0.2C), a voltage ranged from 0.01 V to 1.5 V, and a discharge capacity of the battery was 1161 mAh/g. After 100 cycles, the capacity was 819.5 mAh/g, and capacity retention was 73.1% (as shown in FIG. 2). After 200 cycles, it may be seen from a SEM diagram of a cross section of the negative electrode that an SEI film formed on a silicon surface is about 0.51 µm (as shown in FIG. 3).

It may be seen from the results of Examples 1 to 3 and Comparative Example 1 that, when compared with the lithium-ion battery assembled in Comparative Example 1, the lithium-ion battery assembled in Examples 1 to 3 has higher initial charge/discharge efficiency of a silicon negative electrode, and meanwhile, has less thickening of an SEI film and higher capacity retention of a lithium-ion battery.

Finally, it should be noted that the foregoing experimental examples are merely intended for describing the technical solutions of the present disclosure instead of limiting the present disclosure. Although the present disclosure is described in detail with reference to the foregoing experimental examples, persons of ordinary skill in the art should understand that they may still make modifications to the technical solutions described in the foregoing experimental examples or make equivalent replacements to some or all technical features thereof, without departing from the scope of the technical solutions of the experimental examples of the present disclosure.

## Claims

1. A pre-lithiated silicon negative electrode material, **characterized by**, comprising a silicon negative electrode material and a lithium-containing polymer compounded with the silicon negative electrode material, wherein the lithium-containing polymer comprises a polymer shown in the following formula 1: 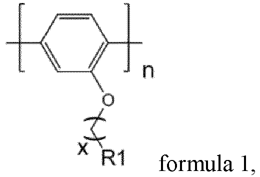 wherein x ranges from 1 to 12, and R1 is: 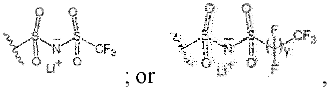 wherein y ranges from 1 to 4; or

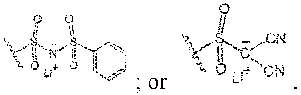

2. The pre-lithiated silicon negative electrode material according to claim 1, **characterized in that** n in the compound of formula 1 generally ranges from 20 to 10000.

3. The pre-lithiated silicon negative electrode material according to claim 1 or 2, **characterized in that** content of the lithium-containing polymer in the pre-lithiated silicon negative electrode material ranges from 0.1 wt% to 20 wt%.

4. The pre-lithiated silicon negative electrode material according to any one of claims 1 to 3, **characterized in that** the pre-lithiated silicon negative electrode material is prepared according to a preparation process comprising the following steps: placing the silicon negative electrode material in a solution containing a lithium-containing polymer, and then removing a solvent to obtain the pre-lithiated silicon negative electrode material.

5. The pre-lithiated silicon negative electrode material according to any one of claims 1 to 4, **characterized in that** the silicon negative electrode material comprises silicon monoxide or pure silicon.

6. A method for preparing the pre-lithiated silicon negative electrode material according to any one of claims 1 to 5, **characterized in that** the silicon negative electrode material is placed in a solution containing a lithium-containing polymer, and then a solvent is removed to obtain the pre-lithiated silicon negative electrode material.

7. A method for preparing the pre-lithiated silicon negative electrode material according to claim 6, **characterized in that** the solvent is removed by using a decompression rotary evaporation method to obtain the pre-lithiated silicon negative electrode material.

8. The preparation method according to claim 6 or 7, **characterized in that** a mass concentration of the lithium-containing polymer in the solution ranges from 0.1 wt% to 50 wt%.

9. A pre-lithiated silicon negative electrode plate, **characterized by** comprising: a negative electrode current collector and a functional layer coated on the negative electrode current collector, wherein a raw material of the functional layer comprises the pre-lithiated silicon negative electrode material according to any one of claims 1 to 5, a conductive agent, and a binder.

10. The pre-lithiated silicon negative electrode plate according to claim 9, **characterized in that** content of the pre-lithiated silicon negative electrode material in the raw material of the functional layer ranges from 60 wt% to 90 wt%, and/or content of the conductive agent ranges from 5 wt% to 30 wt%, and/or content of the binder ranges from 5 wt% to 30 wt%.

11. The pre-lithiated silicon negative electrode plate according to claim 9 or 10, **characterized in that** in a silicon negative electrode active material including the pre-lithiated silicon negative electrode material and a another negative electrode material, content of the pre-lithiated silicon negative electrode material may range from 3 wt% to 100 wt%.

12. The method for preparing the pre-lithiated silicon negative electrode plate according to any one of claims 9 to 11, **characterized by** comprising: coating the negative electrode current collector with slurry containing the raw material of the functional layer to form the functional layer, so as to obtain the pre-lithiated silicon negative electrode plate.

13. A lithium-ion battery, **characterized by** being formed by using the pre-lithiated silicon negative electrode plate according to any one of claims 9 to 11.

## Patentansprüche

1. Vorlithiiertes Silizium-Negativelektrodenmaterial, **dadurch gekennzeichnet, dass** es ein Silizium-Negativelektrodenmaterial und ein mit dem Silizium-Negativelektrodenmaterial kombiniertes lithiumhaltiges Polymer umfasst, wobei das lithiumhaltige Polymer ein Polymer gemäß der folgenden Formel 1 umfasst: 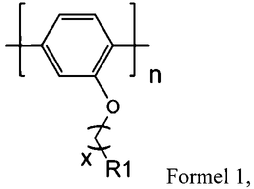 wobei x im Bereich von 1 bis 12 liegt, R1 ist: 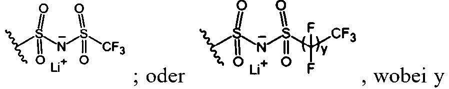 im Bereich von 1 bis 4 liegt; oder

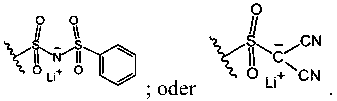

2. Vorlithiiertes Silizium-Negativelektrodenmaterial nach Anspruch 1, **dadurch gekennzeichnet, dass** n in der Verbindung der Formel 1 im Bereich von 20 bis 10000 liegt.

3. Vorlithiiertes Silizium-Negativelektrodenmaterial nach Anspruch 1 oder 2, **dadurch gekennzeichnet, dass** der Gehalt des lithiumhaltigen Polymers in dem vorlithiierten Silizium-Negativelektrodenmaterial im Bereich von 0,1 Gew.-% bis 20 Gew.-% liegt.

4. Vorlithiiertes Silizium-Negativelektrodenmaterial nach einem der Ansprüche 1 bis 3, **dadurch gekennzeichnet, dass** es nach einem Herstellungsverfahren hergestellt ist, das die folgenden Schritte umfasst: Einbringen des Silizium-Negativelektrodenmaterials in eine Lösung, die das lithiumhaltige Polymer enthält, und anschließendes Entfernen des Lösungsmittels, um das vorlithiierte Silizium-Negativelektrodenmaterial zu erhalten.

5. Vorlithiiertes Silizium-Negativelektrodenmaterial nach einem der Ansprüche 1 bis 4, **dadurch gekennzeichnet, dass** das Silizium-Negativelektrodenmaterial Siliziummonoxid oder reines Silizium umfasst.

6. Verfahren zur Herstellung des vorlithiierten Silizium-Negativelektrodenmaterials nach einem der Ansprüche 1 bis 5, **dadurch gekennzeichnet, dass** das Silizium-Negativelektrodenmaterial in eine Lösung, die das lithiumhaltige Polymer enthält, eingebracht wird und dann das Lösungsmittel entfernt wird, um das vorlithiierte Silizium-Negativelektrodenmaterial zu erhalten.

7. Verfahren zur Herstellung des vorlithiierten Silizium-Negativelektrodenmaterials nach Anspruch 6, **dadurch gekennzeichnet, dass** das Lösungsmittel durch Rotationsverdampfung unter vermindertem Druck entfernt wird, um das vorlithiierte Silizium-Negativelektrodenmaterial zu erhalten.

8. Herstellungsverfahren nach Anspruch 6 oder 7, **dadurch gekennzeichnet, dass** die Massenkonzentration des lithiumhaltigen Polymers in der Lösung im Bereich von 0,1 Gew.-% bis 50 Gew.-% liegt.

9. Vorlithiierte Silizium-Negativelektrodenplatte, **dadurch gekennzeichnet, dass** sie umfasst: einen Negativelektroden-Stromkollektor und eine auf dem Negativelektroden-Stromkollektor aufgetragene Funktionsschicht, wobei ein Rohmaterial der Funktionsschicht das vorlithiierte Silizium-Negativelektrodenmaterial nach einem der Ansprüche 1 bis 5, ein leitfähiges Additiv und ein Bindemittel umfasst.

10. Vorlithiierte Silizium-Negativelektrodenplatte nach Anspruch 9, **dadurch gekennzeichnet, dass** der Gehalt des vorlithiierten Silizium-Negativelektrodenmaterials in dem Rohmaterial der Funktionsschicht im Bereich von 60 Gew.-% bis 90 Gew.-% liegt, und/oder der Gehalt des Leitfähigkeitsmittels im Bereich von 5 Gew.-% bis 30 Gew.-% liegt, und/oder der Gehalt des Bindemittels im Bereich von 5 Gew.-% bis 30 Gew.-% liegt.

11. Vorlithiierte Silizium-Negativelektrodenplatte nach Anspruch 9 oder 10, **dadurch gekennzeichnet, dass** in einem Silizium-Negativelektroden-Aktivmaterial, das das vorlithiierte Silizium-Negativelektrodenmaterial und ein weiteres negatives Elektrodenmaterial umfasst, der Gehalt des vorlithiierten Silizium-Negativelektrodenmaterials im Bereich von 3 Gew.-% bis 100 Gew.-% liegt.

12. Verfahren zur Herstellung der vorlithiierten Silizium-Negativelektrodenplatte nach einem der Ansprüche 9 bis 11, **dadurch gekennzeichnet, dass** es umfasst: Auftragen einer Aufschlämmung, die das Rohmaterial der Funktionsschicht enthält, auf den Negativelektroden-Stromkollektor, um die Funktionsschicht zu bilden, um so die vorlithiierte Silizium-Negativelektrodenplatte zu erhalten.

13. Lithium-Ionen-Batterie, **dadurch gekennzeichnet, dass** sie unter Verwendung der vorlithiierten Silizium-Negativelektrodenplatte nach einem der Ansprüche 9 bis 11 gebildet ist.

## Revendications

1. Un matériau d'électrode négative en silicium prélithié, **caractérisé par le fait qu'**il comprend un matériau d'électrode négative en silicium et un polymère contenant du lithium combiné au matériau d'électrode négative en silicium, dans lequel le polymère contenant du lithium comprend un polymère représenté dans la formule 1 suivante : 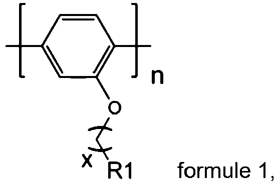 dans laquelle x est compris dans la gamme allant de 1 à 12, et R1 est : 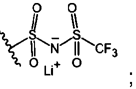 ou 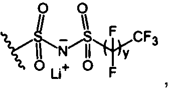 dans laquelle y est compris dans la gamme allant de 1 à 4 ; ou

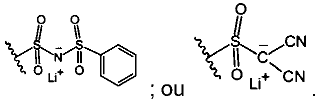

2. Le matériau d'électrode négative en silicium prélithié selon la revendication 1, **caractérisé en ce que** n dans le composé de la formule 1 est généralement compris dans la gamme allant de 20 à 10 000.

3. Le matériau d'électrode négative en silicium prélithié selon la revendication 1 ou la revendication 2, **caractérisé en ce que** la teneur du polymère contenant du lithium dans le matériau d'électrode négative en silicium prélithié est comprise dans la gamme allant de 0,1 % en poids à 20 % en poids.

4. Le matériau d'électrode négative en silicium prélithié selon l'une quelconque des revendications 1 à 3, **caractérisé en ce que** le matériau d'électrode négative en silicium prélithié est préparé selon un processus de préparation comprenant les étapes suivantes : le fait de placer le matériau d'électrode négative en silicium dans une solution contenant un polymère contenant du lithium, et ensuite le fait d'éliminer un solvant afin d'obtenir le matériau d'électrode négative en silicium prélithié.

5. Le matériau d'électrode négative en silicium prélithié selon l'une quelconque des revendications 1 à 4, **caractérisé en ce que** le matériau d'électrode négative en silicium comprend du monoxyde de silicium ou du silicium pur.

6. Un procédé pour préparer le matériau d'électrode négative en silicium prélithié selon l'une quelconque des revendications 1 à 5, **caractérisé en ce que** le matériau d'électrode négative en silicium est placé dans une solution contenant un polymère contenant du lithium, et ensuite un solvant est éliminé afin d'obtenir le matériau d'électrode négative en silicium prélithié.

7. Un procédé pour préparer le matériau d'électrode négative en silicium prélithié selon la revendication 6, **caractérisé en ce que** le solvant est éliminé à l'aide d'un procédé d'évaporation rotatif par décompression afin d'obtenir le matériau d'électrode négative en silicium prélithié.

8. Le procédé de préparation selon la revendication 6 ou la revendication 7, **caractérisé en ce qu'**une concentration en masse du polymère contenant du lithium dans la solution est comprise dans la gamme allant de 0,1 % en poids à 50 % en poids.

9. Une plaque d'électrode négative en silicium prélithié, **caractérisée par le fait qu'**elle comprend : un collecteur de courant d'électrode négative et une couche fonctionnelle revêtue sur le collecteur de courant d'électrode négative, dans laquelle un matériau brut de la couche fonctionnelle comprend le matériau d'électrode négative en silicium prélithié selon l'une quelconque des revendications 1 à 5, un agent conducteur, et un liant.

10. La plaque d'électrode négative en silicium prélithié selon la revendication 9, **caractérisée en ce que** la teneur du matériau d'électrode négative en silicium prélithié dans le matériau brut de la couche fonctionnelle est comprise dans la gamme allant de 60 % en poids à 90 % en poids, et/ou la teneur de l'agent conducteur est comprise dans la gamme allant de 5 % en poids à 30 % en poids, et/ou la teneur du liant est comprise dans la gamme allant de 5 % en poids à 30 % en poids.

11. La plaque d'électrode négative en silicium prélithié selon la revendication 9 ou la revendication 10, **caractérisée en ce que**, dans un matériau actif d'électrode négative en silicium incluant le matériau d'électrode négative en silicium prélithié et un autre matériau d'électrode négative, la teneur du matériau d'électrode négative en silicium prélithié peut être comprise dans la gamme allant de 3 % en poids à 100 % en poids.

12. Le procédé pour préparer la plaque d'électrode négative en silicium prélithié selon l'une quelconque des revendications 9 à 11, **caractérisé par le fait qu'**il comprend : le fait de revêtir le collecteur de courant d'électrode négative d'une suspension épaisse contenant le matériau brut de la couche fonctionnelle afin de former la couche fonctionnelle, de sorte à obtenir la plaque d'électrode négative en silicium prélithié.

13. Une batterie lithium-ion, **caractérisée par le fait qu'**elle est formée à l'aide de la plaque d'électrode négative en silicium prélithié selon l'une quelconque des revendications 9 à 11.
